(19) **Europäisches Patentamt**
**European Patent Office**
**Office européen des brevets**

(11) **EP 1 536 571 B1**

(12) **EUROPÄISCHE PATENTSCHRIFT**

(45) Veröffentlichungstag und Bekanntmachung des Hinweises auf die Patenterteilung:
**16.01.2008 Patentblatt 2008/03**

(51) Int Cl.:
***H04B 3/54*** *(2006.01)*

(21) Anmeldenummer: **03026998.9**

(22) Anmeldetag: **26.11.2003**

(54) **Bussystem zum Steuern elektrischer Verbraucher über das elektrische Netz**

Bussystem for controlling electrical appliances on an electrical network

Système de bus pour contrôler des appareils électriques sur le reseau electrique

(84) Benannte Vertragsstaaten:
**AT DE GB**

(43) Veröffentlichungstag der Anmeldung:
**01.06.2005 Patentblatt 2005/22**

(73) Patentinhaber: **Secyourit GmbH**
**80337 München (DE)**

(72) Erfinder: **Sack, Thomas, Dr.**
**80337 München (DE)**

(74) Vertreter: **Keilitz, Wolfgang**
**Patentanwälte**
**Strohschänk, Uri, Strasser & Keilitz**
**Innere Wiener Strasse 8**
**81667 München (DE)**

(56) Entgegenhaltungen:
**WO-A-02/071644       US-A- 5 089 974**
**US-A- 5 491 463**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Bussystem zum Steuern elektrischer Verbraucher gemäß dem Oberbegriff des Patentanspruchs 1, einen Sensor und einen Aktuator für ein solche Bussystem gemäß dem Oberbegriff des Patentanspruchs 20 bzw. 21, sowie ein Verfahren zur Konfiguration und zum Betrieb eines Bussystems gemäß dem Oberbegriff des Patentanspruchs 22.

Bussysteme umfassen i.d.R. eine Vielzahl von Sensoren und Aktuatoren , die über das elektrische Netz (in Europa das 230V-Netz) miteinander kommunizieren. Derartige Bussysteme, die auch als PLC-Systeme (PLC: Power Line Communication) bezeichnet werden, werden bevorzugt in Wohn-, Büro- und Gewerbekomplexen eingesetzt und dienen zum Steuern elektrischer Verbraucher und zur Gebäudeautomatisierung. Typische Sensoren sind z.B. Schalter, Taster, Bewegungsmelder, Dimmer, Windstärkesensoren, Windrichtungssensoren, Regensensoren, Frostsensoren, Temperatursensoren, Helligkeitssensoren etc., und typische Aktuatoren z.B. Schaltelemente zum Steuern von Lampen oder Elektromotoren, Dimmerschaltungen und Stellglieder aller Art, die entsprechend zu Kommunikationszwecken eingerichtet sind. Als Sensoren bzw. Aktuatoren sollen im Folgenden auch die reinen Kommunikationsmodule gelten, die an bestehende elektrische Komponenten, wie z.B. handelsübliche Schalter, Tasten oder Steckdosen angeschlossen werden können.

Bei einer Kommunikation zwischen den Sensoren und Aktuatoren eines Bussystems werden die übermittelten Informationen von allen am Netz angeschlossenen Elementen empfangen. Es muss daher sichergestellt werden, dass die über das Netz gesendeten Nachrichten oder Steuerbefehle nur von solchen Elementen berücksichtigt werden, die als Adressat bestimmt sind. Hierzu wird mit der Information üblicherweise eine Adresse mitgesendet, die den Adressaten genau spezifiziert. Zum Einstellen der Adresse sind an den Sensoren und Aktuatoren z.B. Schalter vorgesehen, mit denen die Zugehörigkeit bestimmter Sensoren zu bestimmten Aktuatoren festgelegt werden kann.

Der Aufbau der Komponenten bekannter Bussysteme hat den wesentlichen Nachteil, dass Konfiguration und Handhabung für einen Benutzer sehr aufwändig und kompliziert sind. Darüber hinaus sind bekannte Bussysteme sehr fehleranfällig bei der Neuinstallation, dem Betrieb, sowie in gewissen Ausnahmesituationen, wie z.B. bei einem Stromausfall.

Aus dem US-Patent NR. 5,089,974 ist beispielsweise ein Bussystem mit mehreren Sensoren und Aktuatoren bekannt, die an einem elektrischen Netz angeschlossen sind und über das Netz miteinander kommunizieren.

Die internationale Patentanmeldung WO02/07164 A1 offenbart ebenfalls ein Bussystem mit mehreren Komponenten, die über das elektrische Netz miteinander kommunizieren. Um neu installierten Komponenten eine bestimmte Domainadresse zuzuweisen, wird hierbei ein Domainadressvergabe-Verfahren durchgeführt, bei dem eine vorgegebene Komponente eine bestimmte Domainadresse erzeugt und diese mittels eines Abfragebefehls über das Netz an andere Komponenten sendet. Diese Anfrage wird von den jeweiligen Komponenten entweder positiv oder negativ bestätigt, je nachdem, ob die angefragte Adresse bereits benutzt wird oder nicht. Dieses Vergabeverfahren hat den Nachteil, dass es relativ aufwändig und kompliziert ist und gegebenenfalls mehrere Male durchgeführt werden muss.

Es ist daher die Aufgabe der vorliegenden Erfindung, ein Bussystem zu schaffen, dessen Komponenten wesentlich einfacher konfiguriert werden können.

Gelöst wird diese Aufgabe gemäß der Erfindung durch die im Patentanspruch 1, 19 und 21 angegebenen Merkmale. Weitere Ausgestaltungen der Erfindung sind Gegenstand von Unteransprüchen.

Ein wesentlicher Aspekt der Erfindung besteht darin, allen Komponenten des Bussystems, d.h. allen Sensoren und Aktuatoren, sowohl eine Domainadresse als auch eine Individualadresse zuzuweisen. Die Domainadresse spezifiziert dabei die Zugehörigkeit einer Komponente zu einer bestimmten Domain, d.h. einer Menge von Komponenten, die zu einem Verfügungsbereich eines oder mehrerer Nutzer gehören, wie z.B. sämtliche Komponenten innerhalb einer Wohnung. Domains definieren somit Verfügungsbereiche verschiedener Nutzer oder Nutzergruppen. Die Individualadresse ist die einer Komponente innerhalb einer Domain zugeordnete individuelle Adresse, die z.B. an jeder Komponente individuell eingestellt werden kann. Jede Information, die zwischen den Komponenten des erfindungsgemäßen Bussystems ausgetauscht wird, umfasst eine Domainadresse und eine Individualadresse und bestimmt dadurch den bzw. die Adressaten eindeutig. Die übermittelte Information wird dabei nur von solchen Komponenten berücksichtigt, deren eigene Domain- und Individualadresse mit der übermittelten übereinstimmt bzw. dazu passt. Die vorgeschlagene hierarchische Adressstruktur mit einer Domainadresse und einer Individualadresse ermöglicht somit eine sehr einfache und fehlerfreie Kommunikation zwischen den Komponenten des Bussystems. Darüber hinaus hat diese Adressstruktur den wesentlichen Vorteil, dass das Bussystem sehr einfach konfiguriert und bedient werden kann.

Nach einer Installation neuer Komponenten am Netz muss den Komponenten zunächst eine Domainadresse und eine Individualadresse zugeordnet werden. Die Individualadresse kann z.B. an den Komponenten selbst eingestellt werden, wobei zur Einstellung vorzugsweise Drehschalter vorgesehen sind. Drehschalter ermöglichen eine besonders einfache und benutzerfreundliche Adressierung.

Die Domainadresse wird den neuen Komponenten vorzugsweise mit Hilfe eines Domainadressevergabe-Verfahrens zugewiesen, bei dem Komponenten anderer Domains nach einer Domainadresse abgefragt und in Abhängigkeit vom Ergebnis der Abfrage eine neue Domainadresse gebildet wird. Die neu gebildete Domainadresse wird dann den neu installierten Komponenten zugewiesen.

Gemäss einer bevorzugten Ausführungsform der Erfindung wird folgendes Domainadressvergabe-Verfahren vorgeschlagen: An einem Sensor, wie z.B. einem Schalter oder Taster, wird zunächst eine sogenannte Domainadressvergabe-Bedienungsroutine durchgeführt, bei der der Sensor in vorgeschriebener Weise innerhalb einer vorgegebenen Zeit betätigt wird. (Ein Wippschalter kann z.B. innerhalb von 10 Sekunden 10x geschaltet oder ein Taster 5x gedrückt werden).

Der betätigte Sensor sendet daraufhin einen Domainadress-Anforderungs-Befehl über das Netz aus, auf den vorgegebene Komponenten jeweils vorzugsweise die höchste ihnen bekannte Domainadresse zurücksenden. Sofern der Sensor mehrere unterschiedliche Domainadressen empfängt, ermittelt der Sensor z.B. die höchste der empfangenen Domainadressen und bildet daraus eine neue höchste Domainadresse, indem er die höchste empfangene Domainadresse z.B. um eins inkrementiert. Die neu gebildete Domainadresse wird danach über das Netz als neue höchste Domainadresse ausgesendet, wofür z.B. ein Domainadress-Bestätigungs-Befehl verwendet wird. Die neu gebildete Domainadresse wird daraufhin von vorgegebenen, vorzugsweise allen, Komponenten als neue höchste bekannte Domainadresse gespeichert. Außerdem speichert der anfangs betätigte Sensor diese Adresse als eigene oder zumindest als Bestandteil der eigenen Domainadresse.

Die neu gebildete Domainadresse wird vorzugsweise auch von solchen Komponenten als eigene Domainadresse übernommen, die noch keine eigene Domainadresse (d.h. z.B. nur eine voreingestellte Universaladresse) besitzen. Die Initialisierung mit der neuen Domainadresse kann z.B. bereits durch Empfang des Domainadress-Bestätigungs-Befehls oder durch eine separate Domainadress-Weitergabe-Routine erfolgen.

Das vorstehend beschriebene Domainadressvergabe-Verfahren wird vorzugsweise nach einer vollständigen Neuinstallation eines Bussystems durchgeführt, um sämtliche Komponenten neu zu konfigurieren. Der dabei generierte Domainadress-Anforderungsbefehl wird vorzugsweise nur von einem solchen Sensor ausgesendet, der selbst noch keine eigene Domainadresse hat.

Wird dagegen eine bestehende Domain durch neue Komponenten ergänzt, wird vorzugsweise ein Domainadress-Weitergabe-Verfahren durchgeführt. Im Rahmen des Weitergabeverfahrens wird vorzugsweise ein bereits initialisierter Sensor (mit eigener Domainadresse) in vorgegebener Weise betätigt (z.B. ein Schalter innerhalb von 10 Sekunden 10x geschaltet oder eine Taste 5x gedrückt), worauf der Sensor seine eigene Domainadresse mittels einer Domainadress-Weitergabe-Nachricht an alle Komponenten aussendet. Diese Domainadresse wird dann von allen Komponenten, die noch keine eigene Domainadresse aufweisen, d.h. noch nicht initialisiert sind, als eigene Domainadresse übernommen.

Wie erwähnt, reagieren die Netzkomponenten grundsätzlich nur auf solche Nachrichten oder Befehle, deren Adresse (Domain- und Individualadresse) mit der eigenen Adresse übereinstimmen. Darüber hinaus können in den übermittelten Informationen oder an den einzelnen Komponenten Universaladressen enthalten bzw. einstellbar sein. Sofern ein Teil der Gesamtadresse (z.B. die Domain- oder Individualadresse) sender- oder empfängerseitig als Universaladresse eingestellt ist, gilt dieser Teil der Gesamtadresse als übereinstimmend, so dass es empfängerseitig nur auf die Übereinstimmung des übrigen Adressteils ankommt. Enthält eine Information eine universelle Domain- und Individualadresse, wird sie von allen Komponenten berücksichtigt, unabhängig von deren eingestellter Domain- oder Individualadresse; eine Komponente, an der eine universelle Domain- und Individualadresse eingestellt ist, berücksichtigt alle empfangenen Informationen, unabhängig von deren Adressat.

Bei einer Installation größerer Wohn- oder Bürokomplexe kann es vorkommen, dass bestimmte Domains vom Netz getrennt und ohne Spannungsversorgung (ausgeschaltet) sind. Eine von einer anderen Domain im Domainadressvergabe-Verfahren neu gebildete Domainadresse kann an solche Domains bzw. deren Komponenten nicht kommuniziert werden. Wenn schließlich die bereits initialisierten Domains z.B. aus bautechnischen Gründen vom Netz genommen werden, kann dies dazu führen, dass eine Domainadresse doppelt vergeben wird. Um dies zu verhindern, wird vorgeschlagen, eine neu gebildete (höchste) Domainadresse mit einer zusätzlichen Information, wie z.B. einer Zufallszahl zu ergänzen und die ergänzte Domainadresse als eigene Domainadresse im Sensor zu speichern und an sämtliche Komponenten einer Domain weiterzugeben. Nachrichten und Steuerbefehle enthalten in diesem Fall ebenfalls die ergänzte Domainadresse, so dass die Komponenten einer anderen Domain mit der selben (Haupt-)Domainadresse nicht angesprochen werden.

Um zu verhindern, dass sämtliche am Netz angeschlossenen Komponenten auf eine Domainadress-Anforderungs-Nachricht antworten, werden vorzugsweise wenige Komponenten ausgewählt, die auf die Nachricht antworten. Andernfalls wäre das Netz im ungünstigsten Fall über Stunden ausgelastet. Das Verfahren zum Auswählen bestimmter Komponenten umfasst vorzugsweise wenigstens zwei Schritte, wobei in einem ersten Schritt in jeder Domain wenigstens eine Komponente als Domainmaster definiert wird, die auf einen Domainadress-Anforderungs-Befehl antwortet. Der Domainmaster ist vorzugsweise derjenige Sensor, an dem die Domainadressvergabe-Bedienungsroutine durchgeführt wurde. Diese Eigenschaft ist vorzugsweise in dem betreffenden Sensor gespeichert.

In einem zweiten Schritt werden aus den Domainmastern nur solche ausgewählt, deren Domainadresse eine vorgegebene Bedingung erfüllt. Zu diesem Zweck werden z.B. die Domainadressen von Masterkomponenten in N (N ganzzahlig) Segmente mit wenigstens 2 Bit unterteilt und solche Domainmaster ausgewählt, deren Domainadresse für ein erstes Segment eine erste Bedingung und für die übrigen Segmente eine zweite Bedingung erfüllen. Die erste Bedingung besteht vorzugsweise darin, dass im höchstwertigen Segment (umfassend z.B. die zwei höchstwertigen Bits) wenigstens eine "1" vorhanden ist und die zweite Bedingung ist, dass die übrigen Segmente alle "0" sind. Insgesamt antworten somit bei 2 Bit breiten Segmenten höchstens 3 Domainmaster, nämlich diejenigen mit 11,10 oder 01 im ersten Segment, wodurch das Netz nur sehr schwach belastet wird.

Sofern im ersten Segment keine "1" vorkommt, wird die erste Bedingung absteigend auf das zweite, dritte, usw. Segment angewendet. Zwischen den einzelnen Abfragen ist vorzugsweise eine Verzögerungszeit vorgesehen. Nach dem Erhalt einer Domainadress-Antwort-Nachricht von wenigstens einem Domainmaster wird das Verfahren von allen Domainmastern abgebrochen. Falls kein Domainmaster antwortet, bedeutet dies, dass die höchste vergebene Domainadresse D=0 ist, so dass der betätigte Sensor und die zugehörigen Komponenten die Domain D=1 erhalten. Dieses Verfahren zur Auswahl bestimmter Komponenten im Rahmen eines Domainadressvergabe-Verfahrens ermöglicht eine besonders einfache und vor allem schnelle Erzeugung einer neuen Domainadresse, ohne zusätzliche Hilfsmittel, ohne längere Programmier-Verfahren und ohne das Netz zu überlasten.

Die Funktionsbereitschaft des Domainmasters kann alternativ oder konjunktiv z.B. durch folgende zwei Verfahren überwacht werden.

Das erste Verfahren findet Anwendung bei allen Domainmastern. Jeder Domainmaster sendet vorzugsweise eine Master-Bestätigungsnachricht an die anderen Komponenten derselben Domain, um die Existenz eines Domainmasters zu signalisieren. Bei einem Ausfall des Domainmasters, der z.B. durch das Ausbleiben der Master-Bestätigungsnachricht erkannt wird, kann somit eine andere Komponente der Domain die Masterfunktion übernehmen. Die Master-Bestätigungsnachricht wird vorzugsweise in vorgegebenen zeitlichen Intervallen, wie z.B. alle 12 Stunden, versendet. Nach dem Ausbleiben (oder mehrmaligem Ausbleiben) der Master-Bestätigungsnachricht erzeugen vorgegebene Komponenten der Domain einen Zeitwert, nach dessen Ablauf sie eine eigene Master-Übernahme-Anforderung aussenden. Diejenige Komponente mit dem kleinsten Zeitwert sendet die Anforderung zuerst aus und wird somit zum Domainmaster. Andere Komponenten erhalten diese Anforderung ebenfalls und werden dadurch zum "Slave". Die Master-Übernahme-Anforderung kann z.B. die gleiche Nachricht sein wie die Master-Bestätigungsnachricht.

Der Zeitwert ist vorzugsweise eine Funktion der Individualadresse der Komponente. Komponenten mit gleicher Individualadresse würden in diesem Fall den gleichen Zeitwert erzeugen. Um zu verhindern, dass mehrere Komponenten gleichzeitig zum Domainmaster werden, wird vorzugsweise eine zusätzliche Information, wie z.B. eine Zufallszahl, bereitgestellt und in die Master-Übernahme-Anforderung eingefügt. In diesem Fall empfangen die Komponenten einer Domain mehrere Master-Übernahme-Anforderungen, aus denen nun anhand der zusätzlichen Information eine bestimmte Komponente als Master ausgewählt werden kann, wie z.B. diejenige Komponente mit der kleinsten Zufallszahl.

Das zweite Verfahren zur Überwachung der Funktionsbereitschaft ausgewählter Domainmaster wird gleichzeitig mit dem Prozess der Domainadress-Anforderung durchgeführt. Alle Aktuatoren einer Domain überwachen den Domainmaster bzgl. dem Senden der Domainadress-Antwort-Nachricht. Wurde diese Nachricht innerhalb eines vorgegebenen Zeitlimits, z.B. 2 Sekunden, vom Domainmaster nicht gesendet und wurde das Verfahren nicht durch einen Domainadress-Bestätigungs-Befehl abgebrochen, dann senden die Aktuatoren der Domain stellvertretend für den Domainmaster die Domainadress-Antwort-Nachricht nach einem gestaffelten Zeitschema. Hat ein erster Aktuator die Domainadress-Antwort-Nachricht gesendet, dann brechen die übrigen Aktuatoren dieser Domain ihren Überwachungsprozess ab.

Die Aktuatoren des Bussystems sind vorzugsweise derart realisiert, dass sie in Reaktion auf einen Steuerbefehl eine Statusanzeige (STATUS_XX) über den Betriebsmodus wie z.B.

Ein", "Aus", "Auf", "Zu", etc. an den steuernden Sensor zurücksenden. Der Betriebszustand kann somit am Sensor z.B. optisch oder akustisch angezeigt werden.

Zur Vermeidung von Komplikationen im Falle mehrerer Aktuatoren mit gleicher Individualadresse (die somit vom gleichen Steuerbefehl angesprochen werden) wird vorzugsweise ein Master-Aktuator bestimmt. Hierzu ist ein Auswählverfahren vorgesehen, bei dem sämtliche Aktuatoren einer Domain mit gleicher Individualadresse eine zusätzliche Information, wie z.B. eine Zufallszahl bereitstellen, die vorzugsweise in die Status-Nachricht (STATUS_XX) eingefügt wird. Der Master-Aktuator kann somit anhand der zusätzlichen Information einfach ausgewählt werden, wie z.B. derjenige Aktuator mit der kleinsten oder größten Zufallszahl. Bei einem ersten Steuerbefehl antworten zunächst alle Aktuatoren, aus denen anhand der Status-Nachricht ein Master-Aktuator ausgewählt wird. Alle anderen Aktuatoren werden zu Slaves. Beim nächsten Steuerbefehl mit dieser Adresse antwortet dann nur noch der Master-Aktuator mit der Status-Nachricht.

Durch die Definition eines Master-Aktuators ist es ferner möglich, andere Aktuatoren mit der gleichen Individualadresse an den Betriebszustand des zugehörigen Master-Aktuators zu synchronisieren und dessen Betriebszustand zu übernehmen. Die Aktuatoren mit gleicher Domain- und Individualadresse können aus der Status-Nachricht des Master-Aktuators einfach den Status des Master-Aktuators auslesen und diesen Status übernehmen. Somit ist z.B. eine Situation ausgeschlossen, in der zwei Lampen bei Betätigung eines Schalters einschalten und eine Lampe gleichzeitig ausschaltet und somit niemals alle Lampen gleichzeitig ausgeschaltet werden können.

Sofern wegen einer zufällig identischen Information in der Status-Nachricht mehrere Master-Aktuatoren ausgewählt werden, ermitteln diese vorzugsweise eine neue Information (z.B. Zufallszahl) und bestimmen dadurch einen einzigen Master-Aktuator. Die Tatsache, dass mehrere Master-Aktuatoren vorhanden sind, kann z.B. dadurch erkannt werden, dass die Master-Aktuatoren in einer Domain eine oder mehrere andere Status-Nachrichten erhalten.

Bei Ausfall des Master-Aktuators erfolgt keine Bestätigung des Steuerbefehls mit einer Statusnachricht. Dies wird von den anderen Aktuatoren z.B. aufgrund des Ausbleibens einer Status-Nachricht erkannt. In diesem Fall wird vorzugsweise nach einer vorgegebenen Zeitdauer ein neues Master-Aktuator-Auswählverfahren durchgeführt.

Die Komponenten des Bussystems sind vorzugsweise derart gestaltet, dass sie eines der vorstehend beschriebenen Verfahren durchführen können. Hierzu umfassen die Komponenten vorzugsweise jeweils wenigstens eine Prozessoreinheit, ein Sende- Empfangsteil, ein Anschlussteil für den Netzanschluss, sowie wenigstens einen Speicher (der bzw. die auch in der Prozessoreinheit integriert sein kann bzw. können). Die erfindungsgemäßen Komponenten sind vorzugsweise derart ausgeführt, dass sie in einer ausreichend tiefen Unterputzdose hinter gewöhnliche Lichtschalter, Steckdosen oder anderen Netzelementen angebracht werden können.

Das erfindungsgemäße Bussystem umfasst vorzugsweise einen Zeitschalter, der durch einen Einschalt-Steuerbefehl aktiviert wird und der nach Ablauf einer einstellbaren Zeitdauer einen Ausschalt-Steuerbefehl an vorgegebene Aktuatoren aussendet. Der Einschalt-Steuerbefehl kann dabei z.B. eine Einschaltanforderung zum Einschalten von Lampen sein, die z.B. durch Betätigen eines Tasters erzeugt wird. Um zu vermeiden, dass die elektrischen Verbraucher durch erneutes Betätigen des Sensors (z.B. Tasters) wieder ausgeschaltet werden, gehen die Aktuatoren vorzugsweise nach Erhalt einer Zeitsteuer-Nachricht in einen Zeitmodus über, in dem die Aktuatoren für gewisse vordefinierte Schaltvorgänge (z.B. Ausschalten) nur auf Steuerbefehle des Zeitschalters reagieren. Die Zeitsteuer-Nachricht wird vom Zeitschalter vorzugsweise nach Erhalt eines Einschalt-Steuerbefehls generiert.

Durch erneutes Betätigen des Sensors wird der Zeitschalter vorzugsweise neu gestartet, so dass sich die gesamte Einschalt-Zeitdauer der Aktuatoren entsprechend verlängert.

Die Einschalt-Zeitdauer des Zeitschalters kann vorzugsweise durch eine vorgebbare Betätigung des Tasten-Sensors erhöht werden. Die Einschalt-Zeitdauer kann beispielsweise durch langes Drücken des Sensors, z.B. über 2 Sekunden, verdoppelt werden. Der Zeitschalter wird durch diese Betätigung vorzugsweise auch neu gestartet. Dieser Vorgang kann mehrmals wiederholt werden.

Die Individualadresse der einzelnen Komponenten ist vorzugsweise hierarchisch strukturiert und umfasst beispielsweise eine Gruppenadresse und eine Elementaradresse. Eine Komponente des Bussystems berücksichtigt eine empfangene Nachricht in diesem Fall nur dann, wenn die Adresse der Nachricht mit der eigenen Gruppen- und Elementaradresse übereinstimmt bzw. die Adressen zusammenpassen (hinsichtlich Universaladressen). Auch hier kann wiederum eine Universal-Gruppenadresse oder eine Universal-Elementaradresse in der Nachricht verwendet oder am Empfänger eingestellt werden.

Die Erfindung wird nachstehend anhand der beigefügten Zeichnungen beispielhaft näher erläutert. Es zeigen:

Fig. 1 eine schematische Ansicht eines Bussystems mit mehreren Sensoren und Aktuatoren;

Fig. 2 die Bitstruktur einer Domainadresse;

Fig. 3 ein Flussdiagramm zur Darstellung der wesentlichen Verfahrensschritte bei einer Domainadressvergabe-Prozedur;

Fig. 4 ein Flussdiagramm zur Darstellung der wesentlichen Verfahrensschritte eines Domainadress-Weitergabe-Verfahrens;

Fig. 5 ein Flussdiagramm zur Darstellung der wesentlichen Verfahrensschritte bei einem Domainmaster-Auswählverfahren;

Fig. 6 ein Flussdiagramm zur Darstellung der wesentlichen Verfahrensschritte bei der Synchronisation mehrerer Aktuatoren auf einen Master-Aktuator; und

Fig. 7 ein Flussdiagramm zur Darstellung der wesentlichen Verfahrensschritte bei der Bestimmung eines Master-Aktuators.

Fig. 8 eine schematische Ansicht eines Bussystems mit mehreren Sensoren, Aktuatoren und einem Zeitschalter;

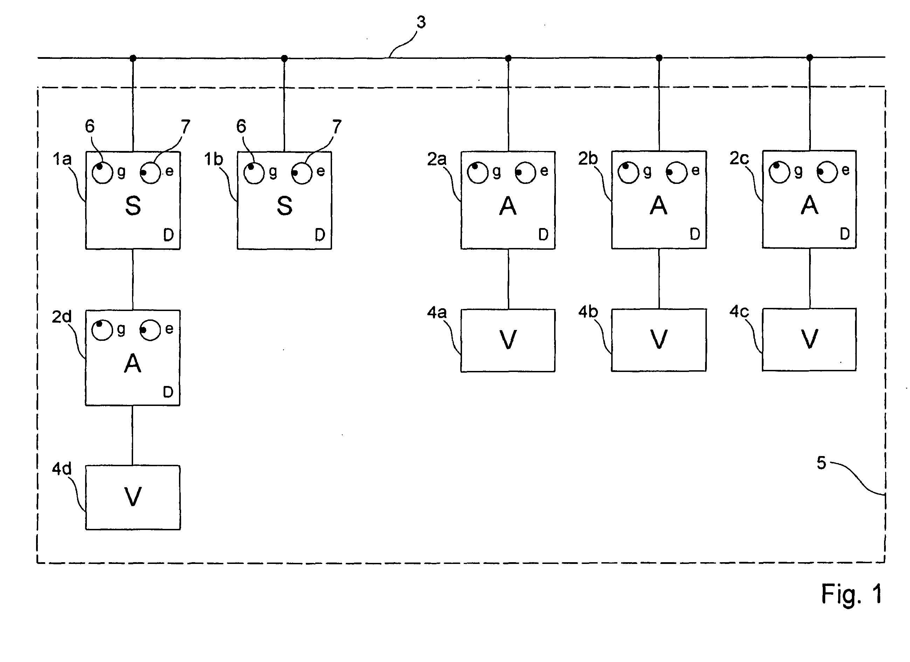

Fig. 1 zeigt eine schematische Darstellung eines Bussystems zum Steuern elektrischer Verbraucher 4, wobei das Bussystem mehrere Sensoren 1 und Aktuatoren 2 umfasst, die alle am 230V-Netz 3 angeschlossen sind und über das elektrische Netz 3 miteinander kommunizieren.

Als Sensoren können je nach Wunsch z.B. Schalter, Taster, Bewegungsmelder, Dimmer, Windstärkesensoren, Windrichtungssensoren, Regensensoren, Frostsensoren, Temperatursensoren, Helligkeitssensoren, etc. vorgesehen sein. Typische Aktuatoren sind z.B. Schaltelemente zum Steuern von Lampen und Elektromotoren, Dimmerschaltungen und Stellglieder aller Art, die entsprechend zu Kommunikationszwecken eingerichtet sind. Als Sensoren 1 bzw. Aktuatoren 2 sollen dabei auch die reinen Kommunikationsmodule gelten, die an bestehende elektrische Komponenten der Hauselektrik, wie z.B. handelsübliche Schalter, Tasten, Steckdosen oder allgemein das Stromnetz angeschlossen werden können.

Alle Komponenten 1,2 besitzen eine Domainadresse D und eine Individualadresse g,e. Die Domainadresse D definiert dabei eine Menge von Sensoren 1 und Aktuatoren 2, die zu einem Verfügungsbereich eines oder mehrerer Nutzer gehören, wie z.B. sämtliche Komponenten 1,2 innerhalb einer Wohnung. Domains 5 definieren somit Verfügungsbereiche verschiedener Nutzer oder Nutzergruppen. Die Individualadresse g,e ist die einer Komponente 1,2 innerhalb einer Domain zugeordnete individuelle Adresse, die an jeder Komponente individuell eingestellt werden kann. Im vorliegenden Beispiel ist die Individualadresse hierarchisch aufgebaut und umfasst eine Gruppenadresse g und eine Elementaradresse g.

Die Gruppen- g und Elementaradresse e werden jeweils mittels Drehschaltern 6,7 eingestellt, die an jeder Komponente 1,2 vorhanden sind.

In Fig. 1 sind nur Komponenten 1,2 gezeigt, die alle derselben Domain 5 angehören. Am elektrischen Netz 3 können beliebig viele weitere Domains 5 (nicht gezeigt) angeschlossen sein.

Jede Information, die zwischen den Komponenten 1,2 des Bussystems ausgetauscht wird, umfasst eine Domainadresse D und eine Individualadresse g,e und bestimmt dadurch den bzw. die Adressaten eindeutig. Die übermittelte Information wird nur von solchen Komponenten 1,2 berücksichtigt und verarbeitet, deren eigene Domain- D und Individualadresse g,e mit der übermittelten übereinstimmt bzw. dazu passt (bei Verwendung von Universaladressen).

Üblicherweise sind die Komponenten 1,2 auf bestimmte Adressen z.B. g=B und e=5 eingestellt, wodurch vorgegebene Aktuatoren 2 vorgegebenen Sensoren 1 zugeordnet werden können. Wahlweise kann auch eine Universaladresse, z.B. D=0, g=0, e=0, für die Domainadresse D, die Gruppenadresse g und/oder die Elementaradresse e benutzt werden. Enthält eine Information eine Universaladresse für D, g und/oder e, oder ist eine Komponente 1,2 auf eine Universaladresse für D, g und/oder e eingestellt, so gilt dieser Teil der Adresse empfängerseitig als übereinstimmend. In diesem Fall werden empfängerseitig nur die übrigen Adressteile auf Übereinstimmung geprüft. Sendet beispielsweise ein Sensor 1a eine Adresse D=1, g=3 und e=0, so reagieren sämtliche Aktuatoren der Domain D=1 und der Gruppenadresse g=3, unabhängig von der Einstellung der Elementaradresse e (Broadcast, Multicast).

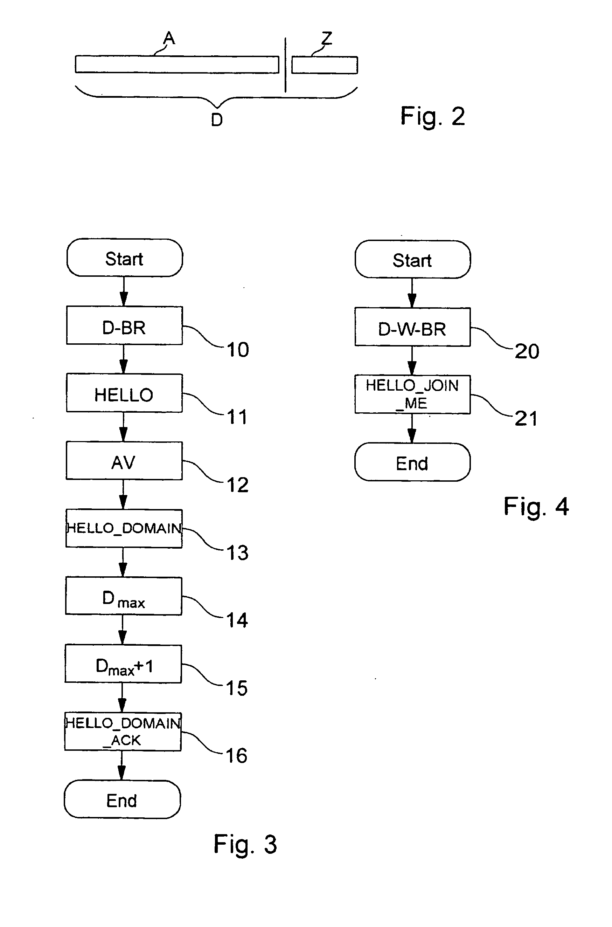

Fig. 2 zeigt die Struktur einer Domainadresse D mit einem Speicherplatz von 2 Byte für eine Domainnummer A und einem Byte für eine zusätzliche Information, wie z.B. eine Zufallszahl Z. Die Funktion der Zufallszahl wird im folgenden noch erläutert.

Nach einer Neuinstallation der Sensoren 1 und Aktuatoren 2 einer Domain 5 muss sämtlichen Sensoren 1 und Aktuatoren 2 eine Domainadresse D zugewiesen werden. Zu diesem Zweck wird ein Domainadressvergabe-Verfahren durchgeführt, wie es beispielhaft in Fig. 3 dargestellt ist.

Fig. 3 zeigt die wesentlichen Verfahrensschritte eines Domainadressvergabe-Verfahrens, bei dem sämtlichen Komponenten 1,2 einer Domain 5 eine neue Domainadresse D zugewiesen wird. Die Komponenten 1,2 befinden sich im Neuzustand üblicherweise in einer Konfiguration, bei der als Domainadresse D eine Universaladresse, z.B. D=0, eingestellt ist. Nach der Neuinstallation der Komponenten 1,2 wird in einem ersten Schritt 10 an einem Sensor 1, wie z.B. Sensor 1a, eine Domainadressvergabe-Bedienungsroutine 10 durchgeführt, bei der der Sensor 1a in vorgeschriebener Weise innerhalb einer vorgegebenen Zeit betätigt wird. Handelt es sich z.B. um einen Wippschalter, wird dieser z.B. 10x betätigt; ein Taster kann z.B. 5x innerhalb einer vorgegebenen Zeit, wie z.B. 10 Sekunden, betätigt werden.

Der Sensor 1a sendet daraufhin einen globalen Domainadress-Anforderungs-Befehl HELLO 11 an alle Komponenten 1,2 sämtlicher Domains 5, und fordert diese damit auf, die höchste ihnen bekannte Domainadresse Dmax zurückzusenden. Bei dieser Domainadresse Dmax handelt es sich vorzugsweise um die höchste bekannte Domainnummer A (die Zufallszahl Z wird in diesem Fall nicht benötigt). Bei neuen Komponenten 1,2 ist diese höchste Domainadresse Dmax in einem entsprechenden Speicher auf Null gesetzt.

Um zu verhindern, dass alle Komponenten 1,2 sämtlicher Domains 5 antworten, werden bestimmte Komponenten 1,2 ausgewählt. Andernfalls wäre der Bus 3 im Extremfall über Stunden nur mit den Domainadress-Antwort-Nachrichten HELLO_DOMAIN belegt. In Schritt 12 werden daher bestimmte Komponenten 1,2 mittels eines nachstehend beschriebenen Auswahlverfahrens ausgewählt.

In einem ersten Schritt dieses Auswählverfahrens wird zunächst in jeder Domain 5 eine Komponente als Domainmaster definiert, der auf einen Domainadress-Anforderungs-Befehl HELLO antwortet. Dies ist vorzugsweise der zuerst gemäss der Bedienungsroutine 10 bediente Sensor 1a, bzw. entsprechende andere Sensoren 1 anderer Domains 5. Bei einer Domainadresslänge von 2 Byte würden immer noch maximal $2^{16}-1 = 65535$ und damit viel zu viele Domainmaster antworten. In einer zweiten Phase des Auswahlverfahrens 12 werden daher unter den Domainmastern solche Domainmaster ausgewählt, deren eigene Domainadresse D bestimmte Bedingungen erfüllt.

Ein besonders einfaches und effektives Auswählverfahren der Domainmaster besteht darin, die Domainadressen der Domainmaster in N Segmente mit jeweils wenigstens 2 bit zu unterteilen (z.B. 8 Segmente bei einer Länge von 16 bit) und solche Domainmaster auszuwählen, deren höchstwertiges Segment wenigstens eine "1" enthält und deren übrige Segmente (S=2....S=8) alle Null sind. In diesem Fall können höchstens drei Domainmaster, nämlich diejenigen, deren erstes Segment S=11, S=10 oder S=01 ist, antworten. Sofern das erste Segment der Domainmasteradressen keine "1" aufweist, werden die übrigen Segmente S jeweils nach einer vorgegebenen Wartezeit sukzessive wertmäßig absteigend abgefragt. Auf das nächste Segment S wird immer dann übergegangen, wenn innerhalb einer vorgegebenen Zeit, wie z.B. 200ms keine Domainadress-Antwort-Nachricht HELLO_DOMAIN empfangen wurde. Sofern ein Domainmaster die vorstehend genannte Adressbedingung erfüllt, sendet er in Schritt 13 eine Domainadress-Antwort-Nachricht HELLO_DOMAIN mit der höchsten ihm bekannten Domainadresse Dmax (d.h. Domainnummer) über das Netz.

In Schritt 14 wählt der ursprünglich betätigte Sensor 1a aus ggf. mehreren empfangenen Domainadressen Dmax die höchste Domainadresse Dmax aus und bildet eine neue höchste Domainadresse, indem er die bislang höchste Domainadresse Dmax um eins inkrementiert (Schritt 15). Diese neu gebildete Domainadresse Dmax wird in Schritt 16 an alle Komponenten 1,2 sämtlicher Domains 5 (vorzugsweise zusammen mit einer Zufallszahl Z) mittels eines Domainadress-Bestätigungs-Befehls HELLO_DOMAIN_ACK kommuniziert und von diesen als höchste bekannte Domainadresse Dmax gespeichert (nur die Domainnummer A).

Zur Vermeidung möglicher Konflikte aufgrund einer Doppelvergabe derselben Domainadresse D, wird der neu gebildeten Domainadresse Dmax eine Zufallszahl Z hinzugefügt (siehe Fig. 2). Die so gebildete Domainadresse D (bestehend aus einer Domainnummer A und der Zufallszahl Z) wird vom Sensor 1a als eigene Domainadresse D übernommen und an die anderen Komponenten 1,2 übermittelt. Solche Komponenten 1,2, die noch keine eigene Domainadresse D besitzen, übernehmen die neu gebildete Domainadresse D einschließlich der Zufallszahl Z als eigene Domainadresse D. Die Initialisierung der anderen Komponenten 1,2 kann z.B. bereits durch Empfang des Domainadress-Bestätigungs-Befehls HELLO_DOMAIN_ACK in Schritt 16 oder durch eine separate Domainadress-Weitergabe-Routine (Fig.4) erfolgen.

Sofern zu einer bereits bestehenden Domain 5 zusätzliche Komponenten 1,2 hinzugefügt werden sollen, muss eine Domainadress-Weitergabe-Routine durchgeführt werden, die im Folgenden anhand von Fig. 4 näher erläutert wird.

Fig. 4 zeigt die wesentlichen Verfahrensschritte der Domainadress-Weitergabe-Routine in Form eines Flussdiagramms. Dabei wird in Schritt 20 zunächst eine Bedienungsroutine an einem bereits initialisierten Sensor, z.B. Sensor 1a, durchgeführt, der daraufhin eine Weitergabenachricht HELLO_JOIN_ME, die die eigene Domainadresse D enthält, aussendet (Schritt 21). Sämtliche neuen Komponenten (z.B. der Aktuator 2c) die noch keine eigene Domainadresse D besitzen, übernehmen diese Domainadresse D als eigene Domainadresse D.

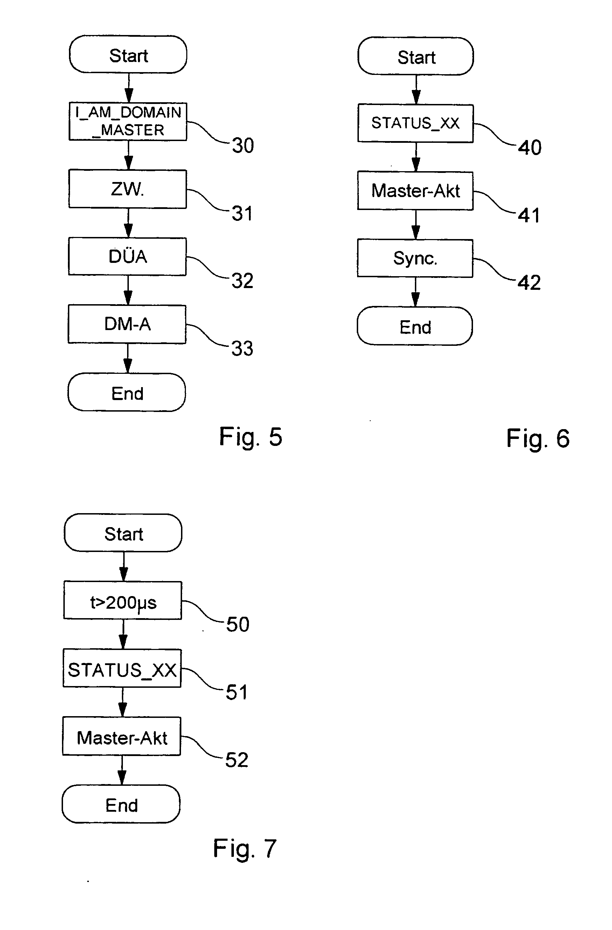

Bei Ausfall eines Domainmasters wird der bisherige Domainmaster vorzugsweise durch einen neuen Domainmaster ersetzt und hierzu z.B. das in Fig. 5 dargestellte Verfahren durchgeführt. Fig. 5 zeigt die wesentlichen Verfahrensschritte eines ersten Verfahrens zur Auswahl eines neuen Domainmasters.

Ein Domain-Master, der wie vorstehend beschrieben ausgewählt wurde, sendet in regelmäßigen Abständen, z.B. alle 12 Stunden, eine Master-Bestätigungs-Nachricht I_AM_DOMAINMASTER an die anderen Komponenten 1,2 derselben Domain 5, um die Existenz eines Domain-Masters zu bestätigen (Schritt 30). Nach z.B. wenigstens zweimaligem Ausbleiben dieser Nachricht gehen die anderen Komponenten 1,2 der Domain 5 davon aus, dass der Domainmaster (z.B. Sensor 1a) ausgefallen ist und eine andere Komponente 1,2 übernimmt die Rolle des Domain-Masters. Hierzu erzeugen z.B. alle Sensoren 1 der Domain 5 einen Zeitwert ZW in Abhängigkeit ihrer Gruppen- g und Elementaradresse e (Schritt 31) und senden nach Ablauf des Zeitwerts ZW eine eigene Master-Übernahme-Nachricht, wie z.B. den Befehl I_AM_DOMAINMASTER, an alle anderen Komponenten 1,2 der Domain 5. Der Zeitwert ZW kann z.B. nach folgender Beziehung berechnet werden:

$$ZW = 24h + (256*g + e)*1s$$

Der bzw. diejenigen Sensoren 1 mit dem kleinsten Zeitwert ZW senden somit in Schritt 32 als erste die Master-Bestätigungs-Nachricht I_AM_DOMAINMASTER. Sämtliche anderen Komponenten 1,2 werden bei Empfang dieser Nachricht automatisch zu "Slaves".

Um zu verhindern, dass mehrere Domainmaster gleichzeitig gebildet werden, enthält die Master-Bestätigungs-Nachricht vorzugsweise eine Zufallszahl. Anhand dieser Zufallszahl kann wiederum durch einfachen Vergleich ein Domainmaster bestimmt werden. Dabei wird z.B. derjenige Sensor 1 mit der kleinsten Zufallszahl zum neuen Domainmaster. Andere Sensoren 1 mit höherer Zufallszahl werden automatisch zu Slaves.

Das zweite Verfahren zur Überwachung der Funktionsbereitschaft ausgewählter Domainmaster wird gleichzeitig mit dem Prozess der Domainadress-Anforderung durchgeführt. Alle Aktuatoren 2 einer Domain überwachen ihren Domainmaster bzgl. dem Senden der Domainadress-Antwort-Nachricht (HELLO_DOMAIN). Wurde diese Nachricht innerhalb eines Zeitlimits, z.B. 2 Sekunden, vom Domainmaster nicht gesendet und wurde das Verfahren nicht durch einen Domainadress-Bestätigungs-Befehl (HELLO_DOMAIN_ACK) abgebrochen, dann senden die Aktuatoren 2 der Domain stellvertretend für ihren Domainmaster die Domainadress-Antwort-Nachricht (HELLO_DOMAIN) nach einem gestaffelten Zeitschema mit dem Zeitwert T. Hat ein erster Aktuator 2 die Domainadress-Antwort-Nachricht (HELLO_DOMAIN) gesendet, dann brechen die übrigen Aktuatoren 2 dieser Domain 5 ihren Überwachungsprozess ab. Der Zeitwert T kann z.B. nach folgender Beziehung berechnet werden:

$$T = 2\ sec + (g\ mod\ 16) * 100\ msec$$

Ein weiterer Vorteil des Bussystems von Fig. 1 besteht darin, dass sich verschiedene Aktuatoren 2, die von dem selben Steuerbefehl angesprochen werden, aufeinander synchronisieren. Ein beispielhaftes Synchronisationsverfahren ist in Fig. 6 dargestellt.

Fig. 6 zeigt die wesentlichen Verfahrensschritte eines Aktuator-Synchronisationsverfahrens in Form eines Flussdiagramms. In diesem Verfahren wird zunächst ein Master-Aktuator definiert, auf den sich sämtliche anderen Aktuatoren 2 der Domain 5 mit derselben Individualadresse g,e synchronisieren. Dadurch wird z.B. ein Zustand vermieden, bei dem verschiedene Aktuatoren 2 auf Anforderung gegensinnig ein- und ausschalten und somit niemals alle Aktuatoren 2 gleichzeitig ein- oder ausgeschaltet werden können.

In einem ersten Schritt 40 antworten zunächst alle Aktuatoren 2 auf einen an sie adressierten Steuerbefehl, z.B. "ON", "OFF", mit einer Status-Nachricht STATUS_XX und melden somit ihren Status an den ursprünglichen Sensor 1 zurück. Stimmen alle Betriebszustände der Aktuatoren 2 überein, kann dieser Betriebszustand bereits am Sensor 1 (z.B. optisch oder akustisch) angezeigt werden. Andernfalls wird kein Betriebszustand angezeigt.

In der Statusnachricht STATUS_XX ist neben dem Status auch eine weitere Information, wie z.B. eine Zufallszahl, enthalten, anhand derer alle angesprochenen Aktuatoren 2 einen Master-Aktuator (z.B. 2a) auswählen können. Alle antwortenden Aktuatoren 2 empfangen jeweils die Status-Nachricht STATUS_XX mit der Zufallszahl der anderen antwortenden Aktuatoren 2. Jeder Aktuator 2, dessen Zufallszahl z.B. kleiner ist als eine empfangene Zufallszahl, wird z.B. zum Slave. Der übrig bleibende Aktuator 2a (mit der größten Zufallszahl) wird in Schritt 42 zum Master. Beim nächsten Steuerbefehl eines zugehörigen Sensors 1 sendet nur noch dieser Master-Aktuator 2a einen Statusbefehl STATUS_XX an den Sensor zurück. Sämtliche anderen angesprochenen Aktuatoren mit derselben Adresse D,g,e empfangen diese Statusnachricht STATUS_XX und können sich darauf in Schritt 42 synchronisieren.

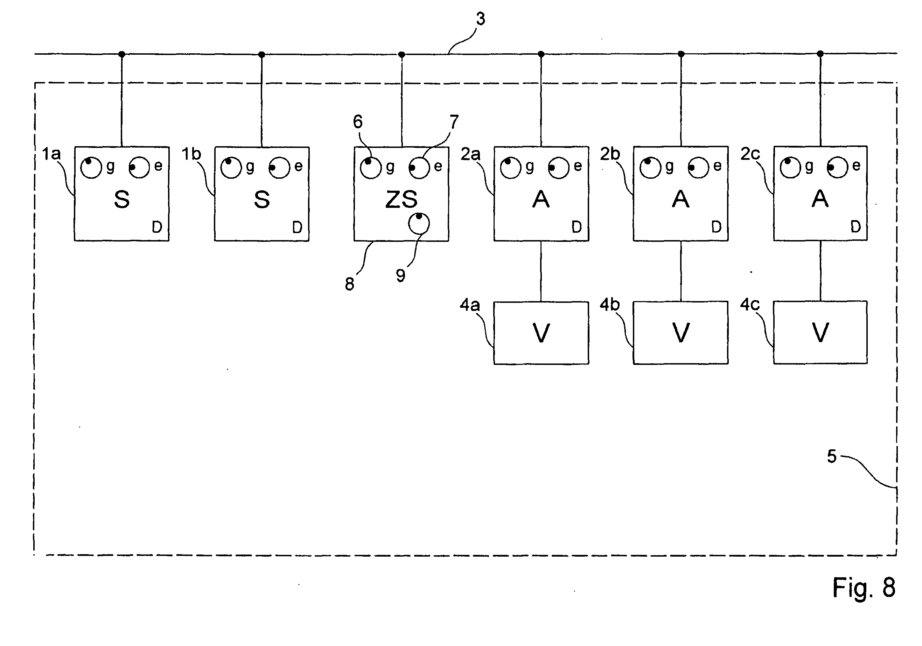

Bei Ausfall eines Master-Aktuators 2 wird dieser vorzugsweise ebenfalls ersetzt werden. Hierzu wird das in Fig. 7 dargestellte Verfahren durchgeführt.

Fig. 7 zeigt die wesentlichen Verfahrensschritte zum Auswählen eines neuen Master-Aktuators. Ein Master-Aktuator sendet, wie bereits erwähnt, nach jedem an ihn adressierten Steuerbefehl eine Statusnachricht STATUS_XX an den zugehörigen Sensor 1 zurück. Der Ausfall eines Master-Aktuators kann somit dadurch erkannt werden, dass die Status-Nachricht STATUS_XX ausbleibt. In Schritt 50 wird der Ausfall eines Master-Aktuators an einem anderen Aktuator 2 mit derselben Adresse D,g,e dadurch erkannt, dass innerhalb einer Zeit von 200ms keine Status-Nachricht STATUS_XX empfangen wird. In Schritt 51 erzeugt daher jeder andere Aktuator 2 mit derselben Adresse D,g,e eine eigene Status-Nachricht STATUS_XX, wiederum ergänzt um eine Zufallszahl. In Schritt 52 wird schließlich wiederum das Master-Aktuator-Auswählverfahren gemäß Fig. 6 durchgeführt und ein neuer Master-Aktuator bestimmt.

Fig. 8 zeigt ein Bussystem mit mehreren Sensoren 1 und Aktuatoren 2, wie es im wesentlichen bereits bezüglich Fig. 1 beschrieben wurde. Die Domain 5 umfasst in diesem Fall auch einen Zeitschalter 8, der nach Ablauf einer einstellbaren Zeitdauer einen Ausschalt-Steuerbefehl an vorgegebene Aktuatoren 2 aussendet. Der Einschalt-Steuerbefehl kann z.B. eine Einschaltanforderung, z.B. "ON", "GO" oder "SWITCH", zum Einschalten von Lampen sein, die z.B. durch Betätigen eines Tasters erzeugt wird. Nach Ablauf der mittels eines Zeit-Wählschalters 9 eingestellten Zeit gibt der Zeitschalter 8 dann einen Ausschalt-Steuerbefehl, wie z.B. "OFF" aus und schaltet dadurch die Verbraucher, z.B. 4a,4b, wieder aus oder übermittelt z.B. einen anderen Steuerbefehl. Der Zeitschalter 8 ist als separates Element ausgeführt und kann an beliebiger, Stelle an das Stromnetz 3 angeschlossen werden.

Um zu vermeiden, dass die eingeschalteten Verbraucher 4 durch wiederholtes Betätigen eines zugehörigen Sensors 1 wieder ausgeschaltet werden, erzeugt der Zeitschalter 8 nach Erhalt eines Einschalt-Steuerbefehls eine Zeitsteuer-Nachricht TIMER_CONTR und übermittelt diese an die zugehörigen Aktuatoren 2a,2b, die daraufhin in einen Zeitmodus übergehen. In diesem Zeitmodus reagieren die Aktuatoren nur auf Steuerbefehle des Zeitschalters 8, nicht jedoch auf eine wiederholte Betätigung eines Sensors 1.

Bei einer nochmaligen Betätigung des Sensors 1 wird der Zeitschalter 8 jedes mal neu aktiviert und somit die Einschalt-Zeitdauer entsprechend verlängert.

Durch erstmaliges oder erneutes Drücken des Tasten-Sensors 1 über eine gewisse Zeitdauer, z.B. 2 Sekunden, verdoppelt der Zeitschalter 8 seine jeweils aktuelle Einschalt-Zeitdauer, die Anfangs durch den Zeit-Wählschalter 9 bestimmt ist, und der Zeitschalter 8 wird zudem neu gestartet. Dieser Vorgang kann mehrmals wiederholt werden.

Bezugszeichenliste

| 1 | Sensoren |
|---|---|
| 2 | Aktuatoren |
| 3 | Elektrisches Netz |
| 4 | Verbraucher |
| 5 | Domain |
| 6 | Gruppenadress-Wählschalter |
| 7 | Elementaradress-Wählschalter |
| 8 | Zeitschalter |
| 9 | Zeit-Wählschalter |
| 10-16 | Domainadressvergabe-Verfahren |
| 20,21 | Domainadress-Weitergabe-Verfahren |
| 30-33 | Verfahren zur Bestimmung eines Domain-Masters |
| 40-42 | Verfahren zur Synchronisation von Aktuatoren |
| 50-52 | Verfahren zum Bilden eines neuen Master-Aktuators |

**Patentansprüche**

1. Bussystem mit mehreren Sensoren (1) und Aktuatoren (2), die an einem elektrischen Netz (3) angeschlossen sind und über das Netz (3) miteinander kommunizieren, wobei die Komponenten (1, 2) , d.h. Sensoren (1) oder Aktuatoren (2) jeweils eine Domainadresse (D), welche die Zugehörigkeit zu einem Verfügungsbereich eines oder mehrerer Nutzer definiert, und eine Individualadresse (g, e) aufweisen,
**dadurch gekennzeichnet,**
**dass** die einzelnen Komponenten (1, 2), derart ausgelegt sind, dass ein Domainadressevergabe-Verfahren durchführbar ist, bei dem

- ein Sensor (1), der gemäß einer vorgegebenen Bedienungsroutine betätigt wird, einen Domainadress-Anforderungs-Befehl (HELLO) über das elektrische Netz (3) an andere Komponenten (1, 2) aussendet und diese nach der höchsten ihnen bekannten Domainadresse (Dmax) abfragt,
- zumindest eine Komponente (1, 2), die höchste ihr bekannte Domainadresse (Dmax) zurücksendet,
- der Sensor (1) die höchste empfangene Domainadresse (Dmax) ermittelt und in Abhängigkeit davon eine neue Domainadresse (Dmax) bildet,
- der Sensor (1) die neu gebildete Domainadresse (Dmax) über das elektrische Netz (3) aussendet, und
- wenigstens eine Komponente (1, 2) die neue Domainadresse (Dmax) als eigene oder zumindest als Bestandteil der eigenen Domainadresse ($D_{max}$) speichert.

2. Bussystem nach Anspruch 1,
**dadurch gekennzeichnet,**
**dass** auch der Sensor (1), an dem die Bedienungsroutine durchgeführt wurde, die neu gebildete Domainadresse (Dmax) als eigene oder zumindest als Bestandteil der eigenen Domainadresse (D) speichert.

3. Bussystem nach Anspruch 1 oder 2,
**dadurch gekennzeichnet,**
**dass** die neu gebildete Domainadresse (Dmax) um eine Information (Z) ergänzt und die ergänzte Domainadresse (D) als eigene Domainadresse (D) gespeichert wird.

4. Bussystem nach Anspruch 1, 2 oder 3,
**dadurch gekennzeichnet,**
**dass** die neu gebildete Domainadresse (Dmax,D) von solchen Komponenten (1,2) als eigene Domainadresse (D) übernommen wird, die noch keine eigene Domainadresse (D) besitzen.

**5.** Bussystem nach einem der vorhergehenden Ansprüche,
**dadurch gekennzeichnet,**
**dass** bestimmte Komponenten (1,2) mittels eines Auswählverfahrens ausgewählt werden, die auf einen Domainadress-Anforderungs-Befehl (HELLO) antworten.

**6.** Bussystem nach Anspruch 5,
**dadurch gekennzeichnet,**
**dass** innerhalb jeder Domain (5) jeweils eine Komponente (1,2) als Domainmaster definiert wird, die auf einen Domainadressanforderungs-Befehl (HELLO) antwortet.

**7.** Bussystem nach Anspruch 6,
**dadurch gekennzeichnet,**
**dass** die Domainmaster ihre Domainadresse (D) in N Segmente (S) mit jeweils wenigstens zwei Bit unterteilen und solche Domainmaster auf einen Domainadress-Anforderungs-Befehl (HELLO) antworten, deren Domainadresse (D) eine vorgegebene Bedingung erfüllt.

**8.** Bussystem nach einem der Ansprüche 5 bis 7,
**dadurch gekennzeichnet,**
**dass** jeder Domainmaster (1,2) eine Master-Bestätigungsnachricht (I_AM_DOMAINMASTER) an andere Komponenten (1,2) der selben Domain (5) aussendet, um die Existenz eines Domainmasters zu bestätigen.

**9.** Bussystem nach Anspruch 8,
**dadurch gekennzeichnet,**
**dass** bei Ausbleiben der Master-Bestätigungsnachricht (I_AM_DOMAINMASTER) eine andere Komponente (1,2) der selben Domain (5) die Rolle des Domainmasters übernimmt.

**10.** Bussystem nach einem der Ansprüche 6 bis 9,
**dadurch gekennzeichnet,**
**dass** die Komponenten (1,2) jeder Domain ihren Domainmaster überwachen und bei einem erkannten Ausbleiben der Domainadress-Antwort-Nachricht (HELLO_DOMAIN) eine andere Komponente (1,2) der Domain als Domainmaster definiert wird und wenigstens diese die fehlende Domainadress-Antwort-Nachricht absetzt.

**11.** Bussystem nach einem der vorhergehenden Ansprüche,
**dadurch gekennzeichnet,**
**dass** die Sensoren (1) und Aktuatoren (2) derart eingerichtet sind, dass im Rahmen eines Domainadress-Weitergabe-Verfahrens (20,21) durch Betätigung eines Sensors (1) ein Domain-Weitergabe-Befehl (HELLO_JOIN_ME) mit der Domainadresse (D) des betätigten Sensors (1) ausgesendet, und die Domainadresse (D) von solchen Komponenten (1,2) gespeichert wird, die noch keine eigene Domainadresse (D) besitzen.

**12.** Bussystem nach einem der vorhergehenden Ansprüche,
**dadurch gekennzeichnet,**
**dass** vorgegebene Aktuatoren (2) eine Statusanzeige (STATUS_XX) über ihren Betriebszustand aussenden.

**13.** Bussystem nach Anspruch 12,
**dadurch gekennzeichnet,**
**dass** mittels eines Auswählverfahrens (41) ein Master-Aktuator bestimmt werden kann, der als einziger unter mehreren Aktuatoren (2) mit gleicher Adresse (D,g,e) eine Statusanzeige (STATUS_XX) aussendet.

**14.** Bussystem nach Anspruch 12 oder 13,
**dadurch gekennzeichnet,**
**dass** in der Status-Nachricht (STATUS_XX) eine zusätzliche Information enthalten ist, anhand derer der Master-Aktuator bestimmt wird.

**15.** Bussystem nach einem der Ansprüche 13 oder 14,
**dadurch gekennzeichnet,**
**dass** sich Aktuatoren (2) mit gleicher Adresse (D,g,e) auf den Status des zugehörigen Master-Aktuators synchronisieren und dessen Betriebszustand übernehmen.

16. Bussystem nach Anspruch 13,
**dadurch gekennzeichnet,**
**dass** bei Ausfall eines Master-Aktuators alle Aktuatoren (2) mit derselben Adresse (D,g,e) eine Status-Nachricht (STATUS_XX) mit einer zusätzlichen Information aussenden und anhand der zusätzlichen Information ein neuer Master-Aktuator bestimmt wird.

17. Bussystem nach einem der Ansprüche 1 bis 12,
**dadurch gekennzeichnet,**
**dass** ein Zeitschalter (8) vorgesehen ist, der nach Erhalt eines Einschalt-Steuerbefehls (ON, GO, SWITCH) eine Zeitsteuer-Nachricht (TIMER_CONTR) aussendet und nach Ablauf einer einstellbaren Zeit (t) einen Ausschalt-Steuerbefehl (OFF) an zugehörige Aktuatoren (2) aussendet.

18. Bussystem nach Anspruch 17,
**dadurch gekennzeichnet,**
**dass** die Aktuatoren (2) nach Erhalt einer Zeitsteuer-Nachricht (TIMER_CONTR) in einen Zeitmodus übergehen, in dem sie nur auf Steuerbefehle des Zeitschalters (8) reagieren.

19. Sensor für ein Bussystem (1,2,3) zum Steuern elektrischer Verbraucher (4) über ein elektrisches Netz (3), wobei der Sensor (1)eine Domainadresse D, die eine Zugehörigkeit zu einem Verfügungsbereich eines oder mehrerer Nutzer festlegt, sowie eine einstellbare Individualadresse (g, e) aufweist
**dadurch gekennzeichnet,**
**dass** der Sensor (1) derart funktional eingerichtet ist, dass das in Anspruch 21 genannte Domainadressvergabe-Verfahren durchgeführt werden kann.

20. Aktuator für ein Bussystem (1,2,3) zum Steuern elektrischer Verbraucher (4) über ein elektrisches Netz (3), wobei der Sensor (1) eine Domainadresse D, die eine Zugehörigkeit zu einem Verfügungsbereich eines oder mehrerer Nutzer festlegt, sowie eine einstellbare Individualadresse (g, e) aufweist,
**dadurch gekennzeichnet,**
**dass** der Aktuator (2) derart funktional eingerichtet ist, dass das in Anspruch 21 genannte Domainadressvergabe-Verfahren durchgeführt werden kann.

21. Verfahren zur Inbetriebnahme und zum Betreiben eines Bussystems mit mehreren Komponenten (1, 2), d.h. Sensoren (1) und Aktuatoren (2), die an einem elektrischen Netz (3) angeschlossen sind und über das elektrische Netz (3) miteinander kommunizieren,
**dadurch gekennzeichnet,**
**dass** ein Domainadressvergabe-Verfahren durchgeführt wird, bei dem

- ein Sensor (1), der gemäß einer vorgegebenen Bedienungsroutine betätigt wird, einen Domainadress-Anforderungs-Befehl (HELLO) über das elektrische Netz (3) an andere Komponenten (1, 2) aussendet und diese nach der höchsten ihnen bekannten Domainadresse (Dmax) abfragt,
- zumindest eine Komponente (1, 2), die höchste ihr bekannte Domainadresse (Dmax) zurücksendet,
- der Sensor (1) die höchste empfangene Domainadresse (Dmax) ermittelt und in Abhängigkeit davon eine neue Domainadresse (Dmax) bildet,
- der Sensor (1) die neu gebildete Domainadresse (Dmax) über das elektrische Netz (3) aussendet, und
- wenigstens eine Komponente (1, 2) die neue Domainadresse (Dmax)als eigene oder zumindest als Bestandteil der eigenen Domainadresse (Dmax) speichert.

**Claims**

1. A bus system comprising of multiple sensors (1) and actuators (2), which are electrically connected to a power line (3) and communicate with each other via the said power line (3), whereupon each of the components (1, 2) have an assigned domain address (D), which defines the affiliation to a particular area allocated to one or several users, and an individual address (g, e),
**characterized by** the fact that the individual components (1, 2) i.e., the sensors (1) and actuators (2) are constructed such that a domain address allocation routine can be executed, during which

- a sensor (1), that is operated according to a predefined procedure, transmits a domain address request message (HELLO) to other components (1, 2) via the power line (3) and queries them for the highest known domain address (Dmax),
- at least one component (1, 2) replies with the highest known domain address (Dmax),
- the sensor (1) generates a new domain address (Dmax) based on the highest received domain address (Dmax),
- the sensor (1) transmits the newly generated domain address (Dmax) via the power line (3), and
- at least one of the components (1, 2) stores the newly generated domain address (Dmax) as its own domain address (Dmax) or as a part of its own domain address (Dmax).

2. The bus system of claim 1,
**characterized by** the fact that the sensor (1) which is operated according to the predefined procedure, also stores the newly generated domain address (Dmax) as its own domain address (D) or as a part of its own domain address (D).

3. The bus system of claim 1 or 2,
**characterized by** the fact that the newly generated domain address (Dmax) is supplemented with information (Z) and this amended domain address (D) is stored as its own domain address (D).

4. The bus system of claim 1, 2 or 3,
**characterized by the fact that** those components (1, 2) which do not already have an assigned domain address (D) adopt the newly generated domain address (Dmax, D) as their own domain address (D).

5. The bus system of one of the preceding claims,
**characterized by** the fact that a selection procedure chooses certain components (1, 2), where the selected components reply to a domain address request message (HELLO).

6. The bus system of claim 5,
**characterized by** the fact that within each domain (5) a single component (1, 2) is defined as the domain-master, where the domain-master replies to a domain address request message (HELLO).

7. The bus system of claim 6,
**characterized by** the fact that the domain-masters divide their domain addresses (D) in N segments (S), with each segment having a minimum of 2 Bits and only those domain-masters whose domain addresses (D) fulfil a predefined condition, reply to the domain address request message (HELLO).

8. The bus system of one of the claims 5 to 7,
**characterized by the fact that** in order to confirm the existence of a domain master, each domain-master (1, 2) transmits a master-confirmation message (I_AM_DOMAINMASTER) to other components (1, 2) in the same domain (5).

9. The bus system of claim 8,
**characterized by the fact that** in the absence of a master-confirmation message (I_AM_DOMAINMASTER) another component (1, 2) in the same domain (5) takes over the role of the domain-master.

10. The bus system of one of the claims 6 to 9,
**characterized by** the fact that the components (1, 2) in each domain monitor their domain-master and in the case of a missing domain address reply message (HELLO_DOMAIN), another component (1, 2) in the domain is defined as the domain-master which thereupon transmits the missing domain address reply message.

11. The bus system of one of the preceding claims,
**characterized by** the fact that the sensors (1) and actuators (2) are constructed such that, within the scope of a domain address propagation procedure (20, 21) started by the operation of a sensor (1), a domain address propagation message (HELLO_JOIN_ME) containing the domain address (D) of the initiating sensor (1) is transmitted and the domain address (D) is stored by those components (1, 2) which do not already have an assigned domain address (D).

12. The bus system of one of the preceding claims,
**characterized by** the fact that specific actuators (2) transmit a status indication message (STATUS_XX) indicating their operating state.

**13.** The bus system of claim 12,
**characterized by the fact that a** master-actuator can be determined via a selection procedure (41), whereupon the said master-actuator is the only actuator (1), within a group of actuators (2) with identical addresses (D, g, e), which transmits a status indication message (STATUS_XX).

**14.** The bus system of claim 12 or 13,
**characterized by the fact that** the status indication message (STATUS_XX) includes additional information, which is used to determine the master-actuator.

**15.** The bus system of one of the claims 13 or 14,
**characterized by the fact that** actuators (2) with identical addresses (D, g. e) synchronize their individual states with the state of the associated master-actuator i.e., they adopt the operating state of the master-actuator.

**16.** The bus system of claim 13,
**characterized by** the fact that in case of a malfunctioning master-actuator, all actuators (2) with identical addresses (D, g, e) transmit a status indication message (STATUS_XX) with additional information and a new master-actuator is determined based on the said additional information.

**17.** The bus system of one of the claims 1 to12,
**characterized by** the fact that provision is made for a timer (8), which transmits a timer control message (TIMER_ CONTR) after receiving an activation message (ON, GO, SWITCH). The said timer (8) transmits a deactivation message (OFF) to all associated actuators (2) after an adjustable time interval (t) has elapsed.

**18.** The bus system of claim 17,
**characterized by** the fact that on receiving the timer control message (TIMER_CONTR) all actuators switch over to a timer mode, wherein they respond only to control messages from the timer (8).

**19.** Sensor for a bus system (1, 2, 3) for controlling electrical appliances (4) via a power line (3),
where the sensor (1) has an assigned domain address (D), which defines the affiliation to a particular area allocated to one or several users, and an adjustable individual address (g, e),
**characterized by** the fact that the sensor is functionally setup to allow the execution of the domain address allocation routine as stated in claim 21.

**20.** Actuator for a bus system (1, 2, 3) for controlling electrical appliances (4) via a power line (3),
where the actuator (2) has an assigned domain address (D), which defines the affiliation to a particular area allocated to one or several users, and an adjustable individual address (g, e),
**characterized by** the fact that the actuator is functionally setup to allow the execution of the domain address allocation routine as stated in claim 21.

**21.** Procedure for installing and operating a bus system with multiple sensors (1) and actuators (2), which are electrically connected to a power line (3) and communicate with each other via the said power line (3),
**characterized by** the fact that a domain address allocation procedure is executed where

- a sensor (1), that is operated according to a predefined procedure, transmits a domain address request message (HELLO) to other components (1, 2) via the power line and queries them for the highest known domain address (Dmax),
- at least one component (1, 2) replies with the highest known domain address (Dmax),
- the sensor (1) generates a new domain address (Dmax) based on the highest received domain address (Dmax),
- the sensor (1) transmits the newly generated domain address (Dmax) via the power line (3), and
- at least one of the components (1, 2) stores the newly generated domain address (Dmax) as its own domain address (Dmax) or as a part of its own domain address (Dmax).

**Revendications**

**1.** Système de bus avec plusieurs capteurs (1) et actionneurs (2) qui sont raccordés à un réseau électrique (3) et communiquent entre eux via le réseau (3), dans lequel les composants (1, 2), c'est-à-dire des capteurs (1) ou des actionneurs (2) présentent respectivement une adresse de domaine (D) qui définit l'appartenance à un secteur de disposition d'un ou plusieurs usagers, et une adresse individuelle (g, e),

**caractérisé en ce que** les différents composants (1, 2) sont disposés de manière à ce qu'un procédé d'attribution d'adresse de domaine soit exécutable, pendant lequel:

- un capteur (1) qui, commandé selon une routine de commande établie, envoie via le réseau électrique (3) un ordre d'interrogation d'adresse de domaine (HELLO) à d'autres composants (1, 2) et demande à ceux-ci l'adresse de domaine (Dmax) la plus élevée à leur connaissance,
- au moins un composant (1, 2) renvoie l'adresse de domaine (Dmax) la plus élevée à sa connaissance,
- le capteur (1) calcule l'adresse de domaine (Dmax) la plus élevée qu'il ait reçue et crée en fonction de celle-ci une nouvelle adresse de domaine (Dmax),
- le capteur (1) envoie l'adresse de domaine (Dmax) nouvellement créée via le réseau électrique (3), et
- au moins un composant (1, 2) sauvegarde la nouvelle adresse de domaine (Dmax) en tant que telle ou au moins en tant que partie constitutive de l'adresse de domaine ($D_{max}$) propre.

2. Système de bus selon la revendication 1, **caractérisé en ce que** le capteur (1), sur lequel la routine de commande a été exécutée, sauvegarde également l'adresse de domaine (Dmax) nouvellement créée en tant que telle ou au moins en tant que partie constitutive de l'adresse de domaine (D) propre.

3. Système de bus selon la revendication 1 ou 2, **caractérisé en ce que** l'adresse de domaine (Dmax) nouvellement créée est complétée par une information (Z) et l'adresse de domaine (D) est sauvegardée en tant que domaine d'adresse (D) propre.

4. Système de bus selon la revendication 1, 2 ou 3, **caractérisé en ce que** l'adresse de domaine (Dmax, D) nouvellement créée est adoptée en tant qu'adresse de domaine (D) propre par ceux des composants (1, 2) qui ne possèdent pas encore une adresse de domaine (D) propre.

5. Système de bus selon l'une des revendications précédentes, **caractérisé en ce que** certains composants (1, 2), qui répondent à un ordre d'interrogation d'adresse de domaine (HELLO), sont sélectionnés au moyen d'un procédé de sélection.

6. Système de bus selon la revendication 5, **caractérisé en ce que** dans chaque domaine (5), un composant (1, 2) respectif, qui répond à un ordre d'interrogation d'adresse de domaine (HELLO), est défini en tant que maître du domaine.

7. Système de bus selon la revendication 6, **caractérisé en ce que** les maîtres de domaine subdivisent leur adresse de domaine (D) en N segments (S) d'au moins respectivement 2 bits et ceux des maîtres de domaine, dont l'adresse de domaine (D) remplit une condition établie, répondent à un ordre d'interrogation d'adresse de domaine (HELLO).

8. Système de bus selon l'une des revendications 5 à 7, **caractérisé en ce que** chaque maître de domaine (1, 2) envoie un message de confirmation du maître (I_AM_DOMAINMASTER) à d'autres composants (1, 2) du même domaine (5) pour confirmer l'existence d'un maître de domaine.

9. Système de bus selon la revendication 8, **caractérisé en ce qu'**en l'absence du message de confirmation du maître (I_AM_DOMAINMASTER), un autre composant (1, 2) du même domaine (5) joue le rôle du maître de domaine.

10. Système de bus selon l'une des revendications 6 à 9, **caractérisé en ce que** les composants (1,2) surveillent chaque domaine de leur maître de domaine, et **en ce qu'**en cas d'absence constatée du message de réponse d'adresse de domaine (HELLO DOMAIN), un autre composant (1, 2) du domaine est défini en tant que maître du domaine et celui-ci au moins révoque le message de réponse d'adresse de domaine.

11. Système de bus selon une des revendications précédentes, **caractérisé en ce que** les capteurs (1) et actionneurs (2) sont agencés de telle sorte que dans le cadre d'un procédé (20, 21) d'attribution d'adresse de domaine par commande d'un capteur (1), un ordre de transmission de domaine (HELLO_JOIN_ME) est envoyé avec l'adresse de domaine (D) du capteur commandé (1) et l'adresse de domaine (D) est sauvegardée par ceux des composants (1, 2) qui ne possèdent pas encore une adresse de domaine (D) propre.

**12.** Système de bus selon l'une des revendications précédentes, **caractérisé en ce que** des actionneurs établis (2) envoient une indication d'état (STATUS XX) sur son état de fonctionnement.

**13.** Système de bus selon la revendication 12, **caractérisé en ce qu'**au moyen d'un procédé (41) de sélection, un actionneur-maître peut être défini qui, seul parmi plusieurs actionneurs (2) à même adresse (D, g, e), envoie une indication d'état (STATUS_XX)..

**14.** Système de bus selon la revendication 12 ou 13, **caractérisé en ce qu'**une information supplémentaire est incluse dans le message d'état (STATUS_XX), au moyen de laquelle l'actionneur-maître est défini.

**15.** Système de bus selon l'une des revendications 13 ou 14, **caractérisé en ce que** des actionneurs (2) à même adresse (D, g, e) se synchronisent sur l'état de l'actionneur-maître correspondant et adoptent son état de fonctionnement.

**16.** Système de bus selon la revendication 13, **caractérisé en ce qu'**en cas de défaillance d'un actionneur-maître, tous les actionneurs (2) à même adresse (D, g, e) envoient un message d'état (STATUS_XX) avec une information supplémentaire et un nouvel actionneur-maître est défini au moyen de l'information supplémentaire.

**17.** Système de bus selon l'une des revendications 1 à 12, **caractérisé en ce qu'**une minuterie (8) est prévue qui, après réception d'une instruction de contrôle de mise en marche (ON, GO, SWITCH), envoie un message de contrôle minuté (TIMER_CONTR) et, une fois le temps réglable (t) écoulé, envoie une instruction de contrôle de mise à l'arrêt (OFF) aux actionneurs (2) correspondants.

**18.** Système de bus selon la revendication 17, **caractérisé en ce que** les actionneurs (2), après réception d'un message de contrôle minuté (TIMER_CONTR), passent en un mode minuté, dans lequel ils ne réagissent qu'aux instructions de contrôle de la minuterie (8).

**19.** Capteur pour un système (1, 2, 3) de bus pour contrôler des consommateurs électriques (4) via un réseau électrique (3), le capteur (1) présentant une adresse de domaine D qui définit une appartenance à un secteur de disposition d'un ou plusieurs usagers, ainsi qu'une adresse individuelle réglable (g, e), **caractérisé en ce que** le capteur (1) est fonctionnellement agencé de telle sorte que le procédé d'attribution d'adresse indiqué dans la revendication 21 peut être exécuté.

**20.** Actionneur pour un système de bus (1, 2, 3) pour contrôler des consommateurs électriques (4) via un réseau électrique (3), le capteur (1) présentant une adresse de domaine D qui définit une appartenance à un secteur de disposition d'un ou plusieurs usagers, ainsi qu'une adresse individuelle réglable (g, e), **caractérisé en ce que** l'actionneur (2) est fonctionnellement agencé de telle sorte que le procédé d'attribution d'adresse indiqué dans la revendication 21 peut être exécuté.

**21.** Procédé pour la mise en service et l'utilisation d'un système de bus avec plusieurs composants (1, 2), autrement dit des capteurs (1) et des actionneurs (2), qui sont raccordés à un réseau électrique (3) et qui communiquent entre eux via le réseau électrique (3), **caractérisé en ce qu'**un procédé d'attribution d'adresse de domaine est exécuté, pendant lequel:

    - un capteur (1) qui, commandé selon une routine de commande établie, envoie via le réseau électrique (3) un ordre d'interrogation d'adresse de domaine (HELLO) à d'autres composants (1, 2) et demande à ceux-ci l'adresse de domaine (Dmax) la plus élevée à leur connaissance,
    - au moins un composant (1, 2) renvoie l'adresse de domaine (Dmax) la plus élevée à sa connaissance,
    - le capteur (1) calcule l'adresse de domaine (Dmax) la plus élevée qu'il ait reçue et crée en fonction de celle-ci une nouvelle adresse de domaine (Dmax),
    - le capteur (1) envoie l'adresse de domaine (Dmax) nouvellement créée via le réseau électrique (3), et
    - au moins un composant (1, 2) sauvegarde la nouvelle adresse de domaine (Dmax) en tant que telle ou au moins en tant que partie constitutive de l'adresse de domaine ($D_{max}$) propre.

Fig. 1

A          Z

D

Fig. 2

Start

D-BR — 10

HELLO — 11

AV — 12

HELLO_DOMAIN — 13

$D_{max}$ — 14

$D_{max}+1$ — 15

HELLO_DOMAIN_ACK — 16

End

Fig. 3

Start

D-W-BR — 20

HELLO_JOIN_ME — 21

End

Fig. 4

Start

I_AM_DOMAIN
_MASTER — 30

ZW. — 31

DÜA — 32

DM-A — 33

End

Fig. 5

Start

STATUS_XX — 40

Master-Akt — 41

Sync. — 42

End

Fig. 6

Start

t>200µs — 50

STATUS_XX — 51

Master-Akt — 52

End

Fig. 7

Fig. 8

EP 1 536 571 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5089974 A
- WO 0207164 A1